# EUROPEAN PATENT APPLICATION

(11) **EP 3 624 009 A1**
(43) Date of publication of application: **18.03.2020**
(21) Application number: 18194869.6
(22) Date of filing: 17.09.2018
(51) Int. Cl.: G06K 15/00, G06K 15/02, G06F 3/12

(54) **METHOD FOR PROVIDING A RASTER IMAGE, PRINT CONTROLLER AND PRINTER**

(71) Applicant: OCE Holding B.V., 5914 CA Venlo (NL)
(72) Inventor: LINT, Alexander, 5914 CA Venlo (NL); VAN DER VEEN, Marcel, 5914 CA Venlo (NL); VAN ACQUOIJ, Catharinus, 5914 CA Venlo (NL)
(74) Representative: Canon Production Printing IP Department

(57) **Abstract**

The invention provides a method for providing a raster image as well as a computer program product, a computer-readable software medium, a raster image processor, a print controller and a printer utilizing the method. Instead of performing a raster image process with a fixed raster image resolution, the raster image process for an image to be printed is first (partially or completely) performed with a lower "testing raster image resolution", the duration of which is measured as a "test duration". Based on the test duration and a timing constraint (such as a maximum time allowed for the raster image process), it is then decided whether the raster image process will be performed with a desired (high) raster image resolution or with another, lower raster image resolution.

## Description

### FIELD OF THE INVENTION

The present invention relates to a method for providing a raster image, a computer program product, a non-transitory computer-readable software medium, a print controller and a printer comprising a print controller.

### BACKGROUND ART

In order to print an image, in most cases at some point a raster image has to be generated that is then processed further and transmitted to a printer for marking a medium, for example paper, with ink, according to the image to be printed. The process of creating a raster image from an image to be printed is called a raster image process, RIP, and may be performed by a raster image processor (which is sometimes also designated as RIP). In some instances, raster images are also known as bitmaps. The input of the raster image process is usually a page description in a high-level page description language (PDL), for example postscript, pdf, xps or the like.

In print shops, one of the main ways to increase efficiency is to try utilizing available resources to the utmost while at the same time maintaining a given schedule. Typically, some time constraints are set, e.g. by a customer, such as a constraint that a certain print job has to be finished by a certain time with a certain minimum quality or above.

Predicting the raster image process time with any accuracy is difficult as it depends on a multitude of factors such as many independent variables that may be derived from the image to be printed but also on the state of the raster image process software such as which data and resources are cached and the like. There is a large spread of page raster image process times at a given resolution, depending on the complexity of the given page as well as the system state.

For example, a simple white page may be "ripped" (i.e. raster image processed) at 15000 images per minute, IPM, while a very complex page on the same system may be ripped at only a few IPM. For a given hardware configuration and image resolution, this means that the system is overburdened for some jobs but underutilized for others. In other words, the system may be making poor use of the available resources. Since for most product configurations the hardware is typically dimensioned towards the worst-case scenario, this leads often to significant underutilization of the available resources.

### SUMMARY OF THE INVENTION

It is one of the objects of the present invention to provide an improved method for providing a raster image that allows to more efficiently utilize available resources.

According to a first aspect of the present invention, that object is solved by a method for
providing a raster image (or: "output raster image"), comprising steps of: providing image data representing an image to be printed;
providing a testing raster image resolution, a desired raster image resolution, and a fallback raster image resolution that is smaller than the desired raster image resolution;
providing at least one timing constraint;
performing at least one raster image process, RIP, or sub-step of a RIP with the testing raster image resolution for the image to be printed;
determining a test duration of the performed at least one RIP or RIP sub-step with the testing raster image resolution;
estimating, based on the determined test duration, whether the at least one timing constraint will be fulfilled by the RIP with the desired raster image resolution or not;
providing an output raster image with the fallback raster image resolution or with the testing image resolution if the at least one timing constraint is estimated to be not fulfilled, and
starting to perform the RIP with the desired raster image resolution for the image to be printed if the at least one timing constraint is estimated to be fulfilled.

Preferably, only those sub-steps are performed whose duration is used for determining the test duration.

It has been noticed for the present invention that increasing a raster image resolution is a way to improve overall print quality, however, the improvement is not equally large for all originals. If, for example, the base raster image resolution is 600 dpi (dots per inch), increasing the raster image process resolution to 1200 will likely benefit small fonts and line graphics (jagged edges), but pictures originally defined as bitmaps will improve much less.

It has also been noticed that pages with the worst performance are typically graphic art originals that contain complex pictures, often including overlays of pictures. The method according to the first aspect uses the performing of at least one raster image process sub-step for a testing raster image resolution in order to select a raster image resolution for the output raster image that makes optimal use of the available resources. Of course, if possible, the desired raster image resolution is selected.

The timing constraint may, in particular, comprise any or all of the following:
- a maximum duration for the raster image process for the image to be printed;
- a time and/or a date by which the raster image process has to be finished;
- a time and/or a date by which a printing of the raster image by a printer has to be started and/or has to be finished;
- a time and/or a date by which a post-processing of the printed image, for example a cutting and/or a curing of the image, has to be started and/or finished.

The timing constraint may further be based on more than one image or more than one print job. For example, the timing constraint may be expressed as an average duration for a sliding window of images to be RIPped. The timing constraint value could be set to a value that corresponds to the nominal engine print speed for the current print mode. This would allow for a less strict or less hard constraint as with some proper buffering individual images may be more complex as long as previous images required less time to RIP than the time between images at the nominal engine print speed.

Alternatively, the timing constraint may be determined based on the already RIPped images buffered and waiting to be printed.

Any or all timing constraints may be set by:
- a user (for example, a user setting manually that a certain print job has to be finished by a certain time);
- an electronic signal received from a print controller or another controlling device indicating a timing constraint.

The raster image process comprises, or consists of, any or all of the following sub-steps, which are performed in sequence in the following order:
1. interpretation: in this sub-step, a page description language (PDL) is translated into an internal representation of each page;
2. rendering: in this sub-step, the internal representation is turned into a continuous tone bitmap and/or a collection of basic objects;
3. screening: in this sub-step, the result of the rendering is usually converted into a half tone, i.e. a pattern of dots;
4. compressing: in this sub-step, the result of the screening is compressed, usually as losslessly as possible.

There may be an additional compressing step between the rendering step and the screening step. For example, it is not uncommon that the interpretation and rendering step are executed in a print controller while the screening step is executed in a print engine. In that case the transfer of the image resulting from the rendering step from the print controller to the print engine can be improved by compressing the image resulting from the rendering step prior to the transfer.

Preferably, performing the at least one raster image process sub-step comprises, or consists of, performing the steps of rendering, screening and compressing. Note that the interpretation step is a pre-requisite for the rendering step. Furthermore, the interpretation step is independent of the RIP resolution and therefore its duration is also independent of RIP resolution. This also makes it advantageous in the context of this invention to cache the result of the interpretation step.

The desired raster image resolution may also be called a "maximum raster image resolution". In most cases, the maximum possible raster image resolution fulfilling the timing constraint will be the desired raster image resolution.

Advantageously, the provided image data indicating an image to be printed refer to a single page, or a sheet of a medium, and the method is repeated for each page, or a sheet, individually. In that way, an optimal use of resources for each individual page is achieved.

As an alternative, for a print job containing a plurality of pages, an absolute number of pages or a percentage number of pages (e.g. the first x% such as the first 10%, the first 5% or the like) may be set and the method may be performed for said number of pages of the print job. The result of the method (i.e. a raster image resolution to be used) may then be applied to the whole print job. In other words, said absolute or percentile number of pages for each print job may be used as a test sample representative of the whole print job for estimating the optimal use of resources for the whole print job.

According to a second aspect, the invention further provides a computer program product comprising executable program code configured to, when executed, perform the method according to the first aspect of the invention.

According to a third aspect, the invention provides a non-transitory computer-readable medium comprising executable program code configured to, when executed, perform the method according to the first aspect of the invention.

According to a fourth aspect, the invention provides a raster image processor configured to perform a method according to the first aspect of the invention.

According to a fifth aspect, the invention provides a print controller comprising the raster image processor according to the fourth aspect.

According to a sixth aspect, the invention provides a printer comprising a print controller according to the fifth aspect of the invention.

Further variants and additional modifications will be apparent from the subject-matter of the dependent claims as well as from the description and the corresponding figures.

In some advantageous embodiments, the fallback raster image resolution is the same as the testing raster image resolution, and may thus be designated as an "initial raster image resolution". In this case, the duration of the performing of the at least one of the at least one performed raster image process sub-step for the fallback raster image resolution is known. The initial raster image resolution may be set to, for example, 600 dpi, or to any other resolution value that has been determined, for a particular printer device for use with the present method, to be a suitable balance between a short duration of the raster image process and a sufficient quality of the produced output raster image with the initial raster image resolution.

Furthermore, advantageously, the results of performing the at least one raster image process sub-step may be stored and, when it is determined that the output raster image is to be provided with the initial raster image resolution, only the remaining, as yet unperformed sub-steps of the raster image process have to be performed. For example, the method may be provided such that the duration of performing the rendering, the screening and the compressing sub-step is determined, which all happen after the interpretation sub-step has already been performed. In other words, an output raster image with the initial raster image resolution has already been produced in order to determine the duration. When it is then determined that the at least one timing constraint is not fulfilled according to the estimating, the previously saved raster image can, according to some embodiments, immediately be used as the output raster image such that no additional time is lost.

In some advantageous embodiments, the fallback raster image resolution is different from the testing raster image resolution. The method may comprise starting to perform the raster image process with the fallback raster image resolution for the image to be printed if the at least one timing constraint is estimated to be not fulfilled.

In some variants, the raster image process with the fallback image resolution is then finished and the raster image having the fallback image resolution is provided as the output raster image. In other variants, the time duration after starting to perform the raster image process with the fallback image resolution may be monitored and, when it is estimated that the at least one timing constraint is also not fulfilled by the raster image process with the fallback image resolution, the output raster image may be provided with the testing image resolution instead.

The providing of the output raster image with the testing resolution may comprise performing the raster image process for the testing image resolution as a whole, may comprise only performing those sub-steps of the raster image process with the testing raster image resolution that have not yet been performed previously (as the interpretation step has been, for example), or may comprise using a previously generated and saved raster image having the testing raster image resolution.

The method may also be realized such that, when during the raster image process with the fallback raster image resolution it is determined that the timing constraint is estimated not to be met by the raster image process with the fallback raster image resolution, but that the timing constraint would also not be met if still unperformed sub-steps with the testing image resolution would take so much time that the at least one timing constraint would also not be met, that the raster image resolution for the output raster image is chosen such that a minimum amount of time is needed to output it. In these variants, it is preferable that the testing raster image resolution is smaller than the fallback raster image resolution.

In some advantageous embodiments, the estimating whether the at least one timing constraint is fulfilled comprises a step of determining an expected duration (or, in other words, estimating a duration) for the raster image process with the desired raster image resolution based on the determined duration of the at least one sub-step performed with the testing raster image resolution.

The at least one timing constraint may comprise, or imply, a maximum allowed duration for the raster image process for the image to be printed. Then the timing constraint may be estimated to be not fulfilled if the expected duration for the raster image process with the desired raster image resolution is larger than the maximum allowed duration.

The expected duration for the raster image process with the desired raster image resolution may be calculated based on the determined duration of the at least one sub-step with the testing raster image resolution, using e.g. a linear extrapolation (per dimension) or an extrapolation according to another type of model.

That model may be continuously updated based on data acquired during the use of the method. For example, whenever during the method an output raster image having the desired raster image resolution is generated, the duration for performing the raster image process with the desired raster image resolution may be compared with the previously determined expected duration for that raster image process and the model may be automatically adapted based on the comparison in order to increase its accuracy.

In some advantageous embodiments, the method comprises a step of determining, during the performing of the started raster image process with the desired raster image resolution for the image to be printed, an expected remaining duration value for the raster image process with the desired raster image resolution, and a step of determining whether the expected remaining duration value fulfills the at least one timing constraint.

In other words, during the performing of the raster image process with the desired raster image resolution it may be continuously monitored if the original estimation that the timing constraint is fulfilled ends up being probably correct or not. The reason for this is that the original estimation may be off for certain worst-case images to be printed and that, the further the raster image process has progressed, the more accurate the estimation of the expected remaining duration of the process becomes.

In case that the expected remaining duration value fulfills the at least one timing constraint, the performing of the raster image process with the desired raster image resolution for the image to be printed may be finished and its result may be provided as the output raster image. However, in case that the expected remaining duration value does not fulfill the at least one timing constraint, a performing of the raster image process with the desired raster image resolution may be stopped.

In some advantageous embodiments, after stopping the performing of the raster image process with the desired raster image resolution, an output raster image having a different raster image resolution from the desired raster image resolution is provided. For example, an output raster image having the testing image resolution or the fallback raster image resolution may be provided.

In some advantageous embodiments, in the course of the method the raster image process with the testing raster image resolution is performed completely in any case (i.e. a full RIP is performed), thus generating a raster image with the testing raster image resolution, which may then be stored. After the stopping of the performing of the raster image process with the desired raster image resolution, the stored generated raster image with the testing raster image resolution may be provided as the output raster image.

In some advantageous embodiments, the testing raster image resolution is equal to or smaller than 600 dpi, preferably 300 dpi or smaller. Preferably, the testing raster image resolution is also not less than 150 dpi as this resolution is considered a sub-standard printing quality, in particular in embodiments where the testing raster image resolution is also the fallback raster image resolution. However, in embodiments where the testing raster image resolution is different from the fallback raster image resolution and is not used (nor intended) for printing, the testing raster image resolution may even be smaller than 150 dpi, e.g. 100 dpi. Such low image resolution values enable a fast estimate.

In some advantageous embodiments, the fallback raster image resolution is 600 dpi or smaller. In some advantageous embodiments, the desired raster image resolution is larger than 600 dpi, preferably 1200 dpi or larger.

In some advantageous embodiments, the method comprises a step of receiving printer resolution data from a printer and any or all of the testing raster image resolution, the desired raster image resolution and/or the fallback raster image resolution may be determined based on the received printer resolution data. In particular, the desired raster image resolution may be determined as equal to the maximum printer resolution as indicated by the printer resolution data. In some embodiments, the testing raster image resolution and/or the fallback raster image resolution is fixed, whereas the desired raster image resolution is variable according to a user input.

In some advantageous embodiments, the at least one performed raster image process sub-step comprises a rendering sub-step, a screening sub-step and/or a compressing sub-step. Preferably, all of these three sub-steps are performed, and their duration is determined.

### BRIEF DESCRIPTION OF THE DRAWINGS

The present invention will become more fully understood from the detailed description given hereinbelow and the accompanying schematic drawings which are given by way of illustration only, and thus are not limitative of the present invention, and wherein:
- Fig. 1: shows a schematic flow diagram of a method for providing a raster image according to an embodiment of the first aspect of the present invention;
- Fig. 2: shows a schematic flow diagram of a method for providing a raster image according to another, especially preferred embodiment of the first aspect of the present invention;
- Fig. 3: shows a schematic block diagram illustrating a computer program product according to the second aspect of the present invention;
- Fig. 4: shows a schematic block diagram illustrating a computer-readable software medium according to the third aspect of the present invention; and
- Fig. 5: shows a schematic block diagram of a raster image processor according to the fourth aspect of the present invention, a print controller according to the fifth aspect of the present invention and a printer according to the sixth aspect of the present invention.

### DETAILED DESCRIPTION OF THE DRAWINGS

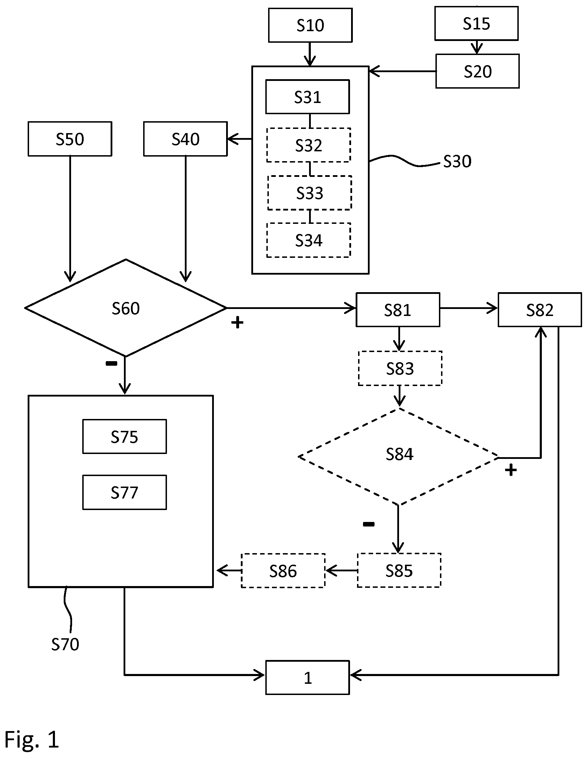

Fig. 1 shows a schematic flow diagram of a method for providing a raster image according to an embodiment of the first aspect of the present invention. It should be understood that the method as illustrated with respect to Fig. 1 may be adapted in any way according to the variations and modifications as discussed in the foregoing.

In a step S10, image data representing an image to be printed are provided, for example received by a raster image processor, a print controller comprising a raster image processor and/or by a printer comprising a print controller comprising a raster image processor.

In a step S20, a testing raster image resolution (or: "first raster image resolution"), a desired raster image resolution (or: "second raster image resolution") and a fallback raster image resolution (or: "third raster image resolution") are provided, wherein the fallback raster image resolution is smaller than the desired raster image resolution and, preferably, the testing raster image resolution is smaller than, or equal to, the fallback raster image resolution.

For example, the testing raster image resolution may be 100 dpi, the desired raster image resolution 1200 dpi and the fallback raster image resolution may be 600 dpi. However, as discussed in the foregoing, the testing raster image resolution may be the same as the fallback raster image resolution, for example 600 dpi.

Said image resolutions may be provided in step S20 by reading them from a memory storage, in which they are stored for a plurality of images to be printed according to, for instance, a manual setting by a user. In some variants, a step S15 of receiving printer resolution data from a printer may be performed, and the providing of at least one of the testing raster image resolution, the desired raster image resolution and/or the fallback raster image resolution may be achieved by determining it based on the received printer resolution data.

For example, the desired raster image resolution may be set automatically to the maximum printer resolution of which the printer is capable based on the received printer resolution data. Thus, when the method is used in connection with several printers, each printer may transmit its printer resolution data to an entity performing the present method, for example an external print controller, and the testing raster image resolution, the desired raster image resolution and/or the fallback raster image resolution may be determined individually for each printer based on its printer resolution data.

In a step S30, at least one raster image process sub-step of a raster image process with the provided testing raster image resolution for the image to be printed is performed. From raster image process sub-steps of interpretation S31, rendering S32, screening S33, and compressing S34, at least one of the sub-steps is performed, preferably the sub-step of interpretation S31 and at least one of sub-steps S32-S34 is performed, more preferably all of the steps S31-S34 are performed. Performing more steps takes more time but improves the accuracy of the method as will be explained in more detail in the following.

In a step S40, a duration of the performing of at least one of the performed at least one raster image process sub-steps S31-S34 with the testing raster image resolution is determined, preferably measured. Said determined duration is designated as a "test duration".

Most preferably, at least one, or all of, the sub-steps of rendering S32, screening S33 and compressing S34 are performed and the duration of at least one of those performed sub-steps S32-S34 is determined as the test duration. Most preferably, all of the steps S31-S34 are performed and, as the test duration, the duration of the performing of the sub-steps S32-S34 is determined.

This is advantageous since the duration of the sub-step interpretation S31 is often independent of a raster image resolution and therefore its omission from the determining of the test duration may improve overall results. The results of step S31 may therefore be cached (or: stored) for future raster image processes to be possibly performed during the method. By contrast, steps S32-S34 are dependent on the image resolution but are often independent from each other so that by monitoring the total duration of sub-steps S32-S34 an especially meaningful (i.e. having high predictive power) test duration may be determined.

In cases where one of the sub-steps S32-S34 is linearly correlated with one or both of the other sub-steps S32-S34, advantageously the test duration may be determined as the duration of the earliest sub-step of the sub-steps linearly correlated with each other may be determined, the duration of the other linearly dependent sub-steps may be extrapolated there from and the combined result may be used as the test duration. Optionally, a duration of the not linearly correlated sub-steps may be added thereto to provide the test duration.

In a step S50, at least one timing constraint is provided.

The timing constraint may, in particular, comprise any or all of the following:
- a maximum duration for the raster image process for the image to be printed;
- a time and/or a date by which the raster image process has to be finished;
- a time and/or a date by which a printing of the raster image by a printer has to be started and/or has to be finished;
- a time and/or a date by which a post-processing of the printed image, for example a cutting and/or a curing of the image, has to be started and/or finished.

Any or all timing constraints may be set by:
- a user (for example, a user setting manually that a certain print job has to be finished by a certain time);
- an electronic signal received from a print controller or another controlling device indicating a timing constraint.

In a step S60, it is estimated, based on the determined test duration, whether the at least one timing constraint will be fulfilled (or, more precisely: likely to be fulfilled) by a raster image process with the desired raster image resolution or not.

If that is not the case (indicated by a minus sign, "-", in Fig. 1), that is, if it is estimated in the step S60 that the at least one timing constraint will not be fulfilled, in a step S70 an output raster image with the fallback raster image resolution or with the testing image resolution (depending on how the method is implemented in a specific case) is provided as an output raster image 1 of the method.

In simple variants, the fallback raster image resolution may be the same as the testing raster image resolution, for example 600 dpi. This is especially advantageous in variants where all of the sub-steps S31-S34 have been performed in step S30 such that a raster image with the testing raster image resolution has already been generated. In that case, the step S30 may also be designated as performing the raster image process with the testing raster image to provide a raster image with the testing raster image resolution, and the method may comprise a step S75 of storing, or saving, the raster image with the testing raster image resolution.

Then, in step S70, said stored raster image with the testing raster image resolution may be provided as the output raster image 1. It may be provided that the stored raster image is deleted if, in step S60, it has been estimated that the at least one timing constraint is fulfilled. Preferably, however, the stored raster image is not deleted as long as no other raster image with a higher resolution has been successfully completed.

Alternatively, in particular when the fallback raster image resolution is different from the testing raster image resolution, step S70 may comprise a step S77 of performing a raster image process with the fallback raster image resolution for the image to be printed, whereafter that raster image with the fallback raster image resolution is provided as the output raster image 1. However, this variant may also be applied even when the fallback raster image resolution is the same as the testing raster image resolution, for example in order to avoid having to provide data storage space for the raster image with the testing raster image resolution, or when not all of the sub-steps S31-S34 are performed during step S30.

If, in step S60, it is estimated, based on the determined test duration, that the at least one timing constraint is fulfilled (indicated by a plus sign, "+", in Fig. 1), then, in a step S81, it is started to perform the raster image process with the desired raster image resolution for the image to be printed. In some advantageous variants, the performing of the raster image process with the desired raster image resolution is performed, after its starting S81, until its finishing in a step S82. In other words, in said variants, when in step S60 it is estimated that the at least one timing constraint is (or will likely be) fulfilled by the raster image process with the desired raster image resolution, said raster image process with the desired raster image resolution is performed from start S81 to finish S82.

In some optional variants additional fail-saves (indicated in Fig. 1 by dashed lines) may be provided, taking into account that the initial estimating S60 based on the test duration may be inaccurate for some worst-case images to be printed. In those variants, after the starting S81 of the raster image process with the desired raster image resolution, a step S83 of determining, during the performing of the raster image process with the desired raster image resolution, an expected remaining duration value for the raster image process with the desired raster image resolution is determined.

The step S83 may be performed regularly or even continuously. By determining of the expecting remaining duration value may also be termed as "estimating an expected remaining duration value" or as "determining an estimated remaining duration value" for the raster image process.

Then, in a step S84, it may be estimated (or determined), based on the determined expected remaining duration value, whether the at least one timing constraint will still be (or, more precisely, is still expected to be) fulfilled. In case that the at least one timing constraint is estimated to be still fulfilled (indicated by a plus sign, "+", by step S84 in Fig. 1), the raster image process with the desired raster image resolution may be continued until its finishing S82, and thus a raster image with the desired raster image resolution may be provided as the output raster image 1.

In case that the at least one timing constraint is not estimated to be still fulfilled (indicated by a minus sign, "-", by step S84 in Fig. 1), an evaluation step S85 may take place.

In some variants, the method may be designed such that in case of the negative outcome (minus sign) of step S84 the performing of the raster image process with the desired raster image resolution is stopped (step S86) and that instead step S70 according to one of the variants described in the foregoing is performed. In other words, if it turns out that the raster image process with the desired raster image resolution will not be finished according to the timing constraint after all, instead a raster image with the testing raster image resolution or with the fallback raster image resolution will be provided as the output raster image 1. Said output raster image 1 may then be designated as a "fallback raster image".

In other variants, it may be evaluated in step S85 how much time is left for the at least one timing constraint to be still fulfilled, and one of the testing raster image resolution, the fallback raster image resolution and the desired raster image resolution will be selected. The method may be implemented such that simply the highest raster image resolution that will still result in the at least one timing constraint to be fulfilled is selected, either from the set of testing raster image resolution and fallback raster image resolution or from a larger set of raster image resolutions.

The method may also be implemented such as to determine whether, at any given time point, there is any raster image resolution at all that will result in the at least one timing constraint to be still fulfilled. In variants of the method, wherein the raster image with the testing raster image resolution is any case generated and stored, this will usually be the case since the stored image can very quickly be loaded and presented as the output raster image 1.

However, in cases where said raster image with the testing raster image resolution is not generated (for example because only some of the sub-steps S31-S34 are performed for determining the test duration) or in methods where that raster image with the testing raster image resolution is generated but not stored, it may be the case that no raster image resolution will lead to the at least one timing constraint to be still fulfilled.

The method may be implemented such that in the latter case for the desired raster image resolution and for at least one other raster image resolution (e.g. testing raster image resolution and/or fallback raster image resolution) a time span by which the raster image process with the corresponding raster image resolution exceeds a due time point (determined according to the at least one timing constraint) is determined and multiplied with a weighting factor that indicates how desired the corresponding raster image resolution is.

For example, it may be determined that the raster image process with the desired raster image resolution will be finished twenty seconds too late and that stopping said raster image process and starting a raster image process with e.g. the fallback raster image resolution would result in finishing ten seconds too late, and it may be further determined that it is more than twice as desired to have an output raster image 1 with the desired raster image resolution than to have one with the fallback raster image resolution.

It may be then determined during the evaluation step S85 that after all the raster image process with the desired raster image resolution will be continued until its finishing S82. Of course, in some variations the method may be designed such that, when no raster image resolution can be found that fulfills the at least one timing constraint, the printing of the image to be printed is abandoned altogether.

Fulfilling the at least one timing constraint may, in the case of multiple timing constraints, mean that all of the multiple timing constraints have to be fulfilled and, conversely, not fulfilling said plurality of timing constraints may mean that at least one of the plurality of timing constraints is not fulfilled. However, a distinction may be made between mandatory timing constraints and optional timing constraints. In that case, the weighting of the time by which raster image processes with certain raster image resolutions exceeds a due time point may be employed with respect to optional timing constraints, whereas the printing of the image to be printed may be abandoned in the case that mandatory timing constraints are not (or not expected to be) fulfilled.

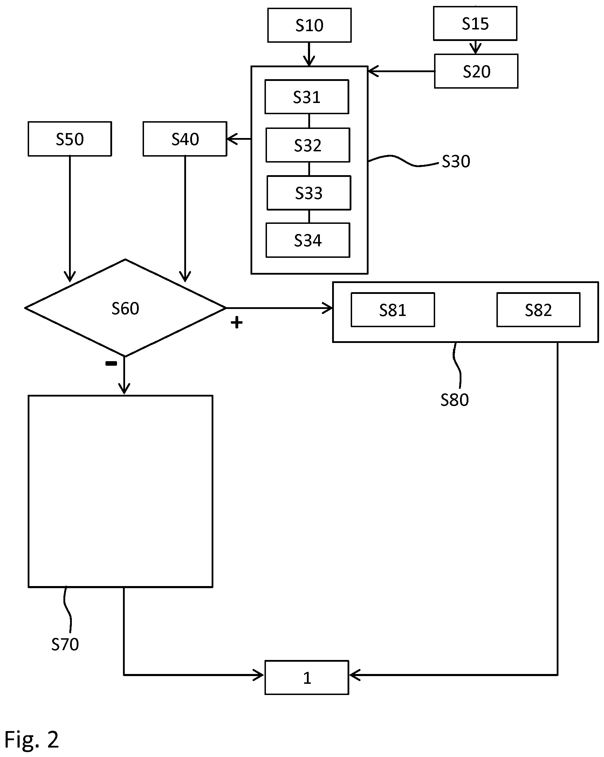

Fig. 2 shows a schematic flow diagram of a method for providing a raster image according to another, especially preferred embodiment of the first aspect of the present invention. It should be understood that also the method as illustrated with respect to Fig. 2 may be adapted in any way according to the variations and modifications as discussed in the foregoing. The method of Fig. 2 is a variant of the method of Fig. 1 so that only the differences thereto will be discussed in detail in the following.

The main difference to the method according to Fig. 1 is that in the method according to Fig. 2 only two different raster image resolutions are considered: a desired raster image resolution, and an initial raster image resolution with a lower dpi value than the desired raster image resolution. The initial raster image resolution combines the roles of both the testing raster image resolution and the fallback raster image resolution of the method of Fig. 1. Preferably, the initial raster image resolution is 600 dpi and the desired raster image resolution is 1200 dpi.

In step S30 of the especially preferred embodiment, all of the sub-steps S31 to S34 are performed. In other words, a full raster image process with the initial (or: testing) raster image resolution is performed during step S30. This is highly advantageous since, as has been mentioned, the duration of specifically sub-step S31 is in general decoupled from the duration of sub-steps S32 and S33. Performing the full (or: complete) raster image process with all sub-steps S31-S34 therefore yields the best predictions about whether the timing constraint will be fulfilled or not.

Moreover, performing step S30 with all sub-steps S31-S34 already yields a raster image with the initial raster image resolution which is then cached (or: stored) in a data storage structure such as a memory (e.g. a semiconductor memory) of a print controller. This raster image can thus be used in case there is not enough time to produce another raster image for the same image to be printed with the desired raster image resolution. The initial raster image resolution is therefore preferably chosen such that raster images with the initial raster image resolution have an acceptable printing quality, e.g. 150 dpi or higher.

In step S40, then, the total duration of the three sub-steps S32-S34 (first option) and/or of all sub-steps S31-S34 (i.e. of the full RIP process S30; second option) with the initial raster image resolution for the image to be printed is determined, preferably measured, and stored as the "test duration".

In step S60, it is estimated, based on the determined test duration, whether the at least one timing constraint will be fulfilled by a raster image process with the desired raster image resolution or not. In other words, it is estimated whether there is enough time available to produce a raster image with an even better resolution (i.e. the desired raster image resolution). Preferably, the desired raster image resolution is the maximum raster image resolution of which a printer that is intended for printing the image to be printed is capable (e.g. determined based on the printer resolution data of step S15).

If it is estimated in the step S60 that the at least one timing constraint will not be fulfilled (indicated by a minus sign in Fig. 2), then step S70 is performed, in which the raster image produced in step S30 with the initial raster image resolution is provided as the output raster image 1 of the method. A raster image with the desired raster image resolution will not be produced.

If, on the other hand, it is estimated in step S60 that, based on the determined test duration, the at least one timing constraint will be fulfilled (indicated by a plus sign,"+", in Fig. 2), then a raster image process is, in a step S80, performed from start S81 to finish S82 with the desired raster image resolution. Then, the generated raster image with the desired raster image resolution is provided as the output raster image 1. The raster image with the initial raster image resolution may be deleted at that point.

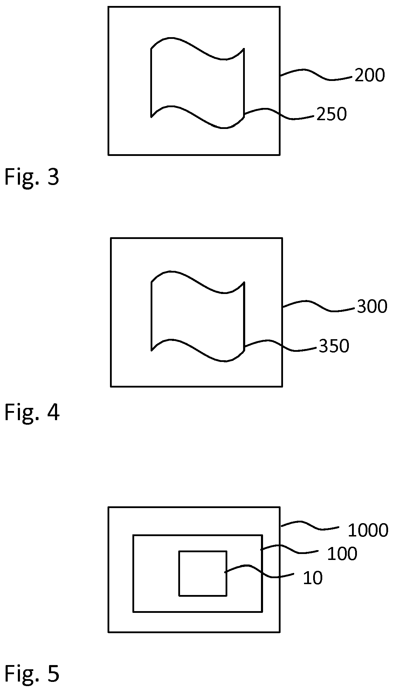

Fig. 3 schematically shows a computer program product 200 comprising executable program code 250 configured to, when executed, perform the method according to the first aspect of the present invention, in particular as has been described with respect to Fig. 1 or Fig. 2.

Fig. 4 schematically shows a non-transitory computer-readable medium 300 comprising executable program code 350 configured to, when executed, perform the method according to the first aspect of the present invention, in particular as has been described with respect to Fig. 1 or Fig. 2.

Fig. 5 shows a schematic block diagram of a raster image processor 10 according to an embodiment of the fourth aspect of the present invention, a print controller 100 according to an embodiment of the fifth aspect of the present invention and a printer 1000 according to an embodiment of the sixth aspect of the present invention.

The raster image processor 10 is configured to perform the method according to the first aspect of the invention, preferably the method explained with respect to Fig. 1 or with respect to Fig. 2, including any of their described options and modifications. The print controller 100 comprises the raster image processor 10, and the printer 1000 comprises the print controller 100.

It will be evident that the described embodiments may be varied in many ways. All such modifications as would be evident to one skilled in the art starting from what is explicitly described are intended to be included.

One basic idea of the invention may be summarized as follows: instead of performing a raster image process with a fixed raster image resolution, the raster image process for an image to be printed is first (partially or completely) performed with a lower "testing raster image resolution", the duration of which is measured as a "test duration". Based on the test duration and a timing constraint (such as a maximum time allowed for the raster image process), it is then decided whether the raster image process will be performed with a desired (high) raster image resolution or with another, lower raster image resolution.

In an especially preferred embodiment, a raster image with an initial raster image resolution is produced. It is then estimated whether there will be enough time to produce a raster image with a desired, higher raster image resolution. If it is estimated that there will indeed be enough time, said raster image with the desired raster image resolution is produced and provided as the output raster image. If it is estimated that there will not be enough time, the raster image with the initial raster image resolution is provided as the output image.

## Claims

1. A method for providing a raster image (1), comprising steps of:
providing (S10) image data representing an image to be printed;
providing (S20) a testing raster image resolution, a desired raster image resolution and a fallback raster image resolution that is smaller than the desired raster image resolution;
providing (S50) at least one timing constraint;
performing (S30) at least one raster image process, RIP, or sub-step of a RIP with the testing raster image resolution for the image to be printed;
determining (S40) a test duration of the performed at least one RIP or RIP sub-step with the testing raster image resolution;
estimating (S60), based on the determined test duration, whether the at least one timing constraint will be fulfilled by the RIP with the desired raster image resolution or not;
providing (S70) an output raster image with the fallback raster image resolution or with the testing image resolution if the at least one timing constraint is estimated to be not fulfilled, and
starting (S81) to perform the RIP with the desired raster image resolution for the image to be printed if the at least one timing constraint is estimated to be fulfilled.

2. The method of claim 1,
wherein the fallback raster image resolution is the same as the testing raster image resolution.

3. The method of claim 1,
wherein the fallback raster image resolution is different from the testing raster image resolution, and wherein the method comprises starting (S77) to perform the RIP with the fallback image resolution for the image to be printed if the at least one timing constraint is estimated to be not fulfilled.

4. The method of any one of claims 1 to 3,
wherein the estimating (S60) whether the at least one timing constraint is fulfilled comprises a step of determining an expected duration for the RIP with the desired raster image resolution based on the determined duration of the at least one sub-step with the testing raster image resolution.

5. The method of claim 4,
wherein the at least one timing constraint comprises, or implies, a maximum allowed duration for the RIP for the image to be printed; and
wherein the timing constraint is estimated to be not fulfilled if the expected duration for the RIP with the desired raster image resolution is larger than the maximum allowed duration.

6. The method of any one of claim 1 to 5, comprising:
Determining (S83), during the performing of the RIP with the desired raster image resolution for the image to be printed, an expected remaining duration value for the RIP with the desired raster image resolution;
Estimating (S84), based on the determined expected remaining duration value, whether the at least one timing constraint will still be fulfilled; and
in case that the at least one timing constraint is estimated to be still fulfilled: finishing (S82) to perform the RIP with the desired raster image resolution for the image to be printed and providing a result thereof as an output raster image (1);
or,
in case that the at least one timing constraint is not estimated to still be fulfilled:
stopping (S86) the performing of the RIP with the desired raster image resolution.

7. The method of claim 6,
wherein, after stopping (S86) the performing of the RIP with the desired raster image resolution, an output raster image (1) having a different raster image resolution from the desired raster image resolution is provided (S70).

8. The method of claim 7, comprising:
performing (S30) the RIP with the testing raster image resolution for the image to be printed to generate a raster image with the testing raster image resolution;
saving (S75) the generated raster image with the testing raster image resolution; and
wherein after stopping (S86) the performing of the RIP with the desired raster image resolution the saved generated raster image with the testing raster image resolution is provided (S70) as the output raster image (1).

9. The method of any one of claims 1 to 8,
wherein the testing raster image resolution is smaller than 600 dpi and/or wherein the fallback raster image resolution is at least 600 dpi and/or wherein the desired raster image resolution is equal to, or larger, than 600 dpi.

10. The method of any one of claims 1 to 9, comprising:
receiving (S15) printer resolution data from a printer;
wherein the testing raster image resolution, the desired raster image resolution and/or the fallback raster image resolution is determined (S20) based on the received printer resolution data.

11. The method of any one of claims 1 to 10, comprising:
wherein the at least one performed RIP sub-step comprises a rendering sub-step (S32), a screening sub-step (S33) and/or a compressing sub-step (S34).

12. A computer program product (200) comprising executable program code (250) configured to, when executed, perform the method according to one of claims 1 to 11.

13. A non-transitory computer-readable medium (300) comprising executable program code (350) configured to, when executed, perform the method according to one of claims 1 to 11.

14. A print controller (100) comprising a raster image processor (10) configured to perform the method according to one of claims 1 to 11.

15. A printer (1000) comprising a print controller (100) according to claim 14.
